# EUROPEAN PATENT APPLICATION

(11) **EP 3 046 052 A1**
(43) Date of publication of application: **20.07.2016**
(21) Application number: 16151056.5
(22) Date of filing: 13.01.2016
(51) Int. Cl.: G06K 19/077

(54) **SYSTEM AND METHOD FOR MARKING OBJECTS**

(30) Priority: 13.01.2015 DE 202015000057 U
(71) Applicant: S+P Samson GmbH, 86438 Kissing (DE)
(72) Inventor: Boisson, Michael, 82131 Gauting (DE); Jelinek, Wolfgang, 86529 Schrobenhausen (DE)
(74) Representative: Vossius & Partner Patentanwälte Rechtsanwälte mbB

(57) **Abstract**

The present invention relates to a label for marking objects, wherein the label has at least two oppositely arranged surfaces and comprises at least three stacked layers, including a data layer having a microelectronic device, a first adhesive layer having a first adhesive material and being provided on one side of the data layer, the first adhesive layer defining a bottom side of the label; and a second adhesive layer having a second adhesive material and being provided on the other side of the data layer, the second adhesive layer defining a top side of the label.

## Description

The present invention relates marking objects. In particular the invention relates to the marking with RFID readable labels.

In many situations and different fields of technology a reliable marking method for objects is desirable. The marking of metal objects is particularly challenging. Even more challenging is the marking of medical utilities, e.g., surgical tools and implants as well as other medical equipment. Equally challenging is the marking of parts and tools for machining under rough environmental conditions and/or in an industrial workplace.

RFID technology has been proven to be a versatile and reliable method for marking objects. With recent developments RFID tags can be small enough to fit virtually any application and some known advantages are: passive readouts, bulk readouts, and long lifetime. Several standards for RFID tags have evolved.

However, applying an RFID tag to an uneven surface may be challenging. Typical RFID tags have dimensions of some millimeters and a rigid outer structure that is provided by an encapsulation. Such RFID tags are typically not flexible (e.g., bendable) in their encapsulated configuration. Bending the RFID tag might compromise its function. Applying a rigid RFID tag to an uneven surface will create the problem of a reduced contact surface, resulting in a reduced bonding strength and a increase of the danger of accidental removal.

Applying an RFID tag to a hard surface is also challenging. A possible solution found in the prior art is a local adaptation of the surface to be marked. Ablation of the surface or methods of drilling a hole for fitting the RFID tag have been proposed. However, these methods are complex and/or time consuming in case the material to be marked is hard and difficult to machine. Furthermore, the structural integrity of the object to be marked might be compromised when the RFID tag is applied using a method relying on an ablation technique.

Furthermore, applying an RFID tag into or onto a metal surface is challenging because the metal will shield the RFID tag and compromise the function of the RFID tag.

The marking often has to withstand rough environmental conditions, e.g., high temperatures, low temperatures, extreme temperature cycles, UV or X-ray radiation, high humidity and/or chemical agents. The bonding of the RFID tag must withstand all of these conditions.

Assuming a realistic number of, e.g., 10000 objects to be marked in a single location, e.g., a hospital or production facility; even a few minutes of marking per object will result hundreds of hours of marking time. Therefore the method for marking must be time-efficient.

The present invention addresses the above problems. It is an object of the present invention to provide improved systems and methods for marking. This object is solved by the subject-matter of the independent claims of the present invention. The dependent claims relate to further aspects of the invention.

A first aspect of the invention relates to a label for marking objects, wherein the label has at least two oppositely arranged surfaces and comprises at least three stacked layers, including: a data layer having a microelectronic device, a first adhesive layer having a first adhesive material and being provided on one side of the data layer, the first adhesive layer defining a bottom side of the label, and a second adhesive layer having a second adhesive material and being provided on the other side of the data layer, the second adhesive layer defining a top side of the label.

In an embodiment of the invention, the microelectronic device is an Auto-ID device, for example a RFID transponder, hereinafter referred to as "RFID tag". In another embodiment, other active and/or passive microelectronic devices may be used.

In an embodiment of the invention, the adhesive materials of the first and the second adhesive layer are the same. In other embodiments of the invention, the adhesive materials of the first and the second adhesive layers are not the same but have certain individual properties improving or complementing each other in performance, endurance, resistance and/or handling.

In some embodiments of the invention, an additional layer is provided between the data layer and the second adhesive layer. This additional layer is referred to as "first additional layer". The first additional layer may have human-readable and/or machine-readable data.

In embodiments of the invention, the first additional layer may be a preprinted sequence of characters and/or machine readable data including, but not being limited to, 1 or 2 dimensional data, such as bar-codes and/or 2D codes (e.g., QR codes).

In embodiments of the invention, the first additional layer is made of a printable material. The printable material can be printed with human-readable and/or machine-readable data. The printing process may be carried out during the production process of the label, or the printing process is carried out after the production process of the label, or the printing process is carried out after the production process of the label and prior to the marking process at the marking site.

In some embodiments of the invention, an additional layer is provided on the top side or the bottom side or both. This additional layer is referred to as "second additional layer". The second additional layer may be configured to act as a removable protective cover (liner) and/or a carrier configured to provide structural support for the label.

In an embodiment of the invention, the second additional layer is opaque or at least not transparent and protects the adhesive materials in the label from activation via an energy portion of light. In other embodiments of the invention, the second additional layer is transparent and allows the user to identify the location of the microelectronic device in the data-layer. In some embodiments of the invention, the second additional layer is only transparent to certain type of radiation, e.g., a particular wavelength, and allows the user to identify the location of the microelectronic device in the data layer while protecting the adhesive materials in the label from activation via an energy portion of light. In some embodiments of the invention, the second additional layer protects the adhesive materials from chemical reactions with chemical elements of the environment, e.g., oxygen of the surrounding air, humidity or water in the surrounding space.

The thickness of the label is defined by the thickness of the used microelectronic device and the volume of adhesive material required for bonding and encapsulating the label to the surface to be marked. The thickness of all layers of the label together preferably totals to no more than 500 µm, particularly no more than 400 µm, or even no more than 300 µm. In a preferred embodiment, the thickness of the label is in the range of 150 µm to 500 µm or to 400 µm or to 350 µm, preferably in the range of 200 µm to 500 µm or to 400 µm or to 350 µm, or more preferably 250 µm to 500 µm or to 400 µm or to 350 µm. These thickness values have been proven to have no negative effect on the handling of the object to be marked, particularly if the object to be marked is from the group of medical devices, surgical tools, and other equipment used in the health-care field. In other fields of use the thickness and/or size may be subject to other restraints.

In some embodiments of the invention, the carrier may comprise a temperature resistant material, preferably a polymer, resistant to temperatures of at least 200 °C, preferably at least 225 °C or at least 250 °C. In an embodiment of the invention, the carrier may comprise a polymer such as polyimide, polyarylketone, polyether sulfone, polyetherimide. The carrier material is typically chosen so as to withstand a maximum temperature that is above the temperature required for activation of the adhesive material of the adhesive layers and/or a maximum environmental temperature the label being expected to be subject to. A typical maximum temperature is at least 200 °C, preferably at least 225 °C or at least 250 °C. This temperature has been proven to be adequate particularly for the marking of objects from the group of medical devices, surgical tools, and other equipment used in the health-care field. In other fields of use the maximum temperature may be subject to other restraints.

In some embodiments of the invention, the first adhesive layer is provided on top of the carrier, i.e. the carrier forms the second additional layer. In other embodiments of the invention, the first adhesive layer is provided underneath the carrier.

According to the invention, the labels can be produced in an endless or quasi-endless production process. The person skilled in the art will realize that depending on the manufacturing process, the carrier will be located at different positions in the finished label.

In an embodiment, the carrier provides structural support to the label and during the manufacturing process the different layers will be successively applied to the carrier on the top and/or bottom of the carrier and/or each other.

The adhesive layers may comprise at least one of epoxy resin based adhesives, particularly epoxy resin based adhesives films, and polyurethane based adhesives, particularly polyurethane based adhesive films.

Another aspect of the invention relates to a one or two dimensional label matrix, comprising a plurality of labels for marking objects according the above description, wherein the plurality of labels are each releasably or removably attached to a common carrier.

The labels and the label matrix according to the invention can be produced in an endless or quasi-endless manufacturing process. A common carrier is used to transport the plurality of labels through the manufacturing process and/or the marking process. In an embodiment of the invention, the common carrier is identical to the individual carrier of the label and thus the total number of layers is reduced. In another embodiment of the invention, the common carrier is not identical to the individual carrier of the label. For example, the common carrier may be provided on top of the matrix configured to protect the top adhesive layer of the plurality of labels.

The manufacturing process in general depends on the materials required for a specific label. The materials depend on the requirements for a specific application. The requirements may include chemical, physical, economic and/or ergonomic requirements.

In some embodiments of the invention, all layers except for the common carrier are cut, perforated and/or cleaved around the circumference of the microelectronic device of the data layer, e.g., in a cutting, e.g., die cutting, a stamping or a punching process. In these embodiments and other embodiments, all layers of an area not having a microelectronic device in the data layer are removed from the common carrier so that only the labels remain on the common carrier.

In an embodiment of the invention, the label matrix is manufactured in an endless manufacturing process by successively applying the different layers to the common carrier. In a successive step the individual labels may be formed in a punching process. In the punching process, all layers are cut, perforated and/or cleaved around the circumferences of the individual microelectronic devices in the data layer of the individual labels to be formed.

In yet another successive step the excess material not containing a microelectronic device, i.e., in areas or an area between the individual labels of the label matrix preferably may be removed. Thus, the labels of the label matrix are formed on the common carrier. In some embodiments of the invention, the common carrier itself may be perforated in the preceding punching process or a successive punching process. This allows individual labels to be more easily separated from the remaining matrix in a confectioning step.

Another aspect of the invention relates to a method for marking objects comprising the steps of:
a) providing an object to be marked having a surface to be marked,
b) providing a label for marking objects according to the above description,
c) positioning the label on the surface to be marked,
d) activating the adhesive materials of the adhesive layers and allowing the adhesive layers to form an integral encapsulating cover to the microelectronic device in the data layer by connecting with each other and the object to be marked.

According to an embodiment of the invention, step b) of providing the label comprises the step of separating or removing the label form a label matrix, for example, by separating the at least one common carrier of the matrix around an area comprising a microelectronic device in the data layer or removing the label from the common carrier.

Reference is made to the above described punching process which may help to facilitate the cleaving/separation process. An additional punching process may be used to separate the label from the label matrix.

In an embodiment of the invention, the step of providing a label comprises the step of removing at the least one protective cover (liner) from the label.

In some embodiments of the invention the method may comprise the step of preparing the surface of the object to be marked, for example, by at least one of mechanical surface preparation, chemical surface preparation and physical surface preparation. A mechanical surface preparation may include sandblasting, grinding, and/or polishing of the surface. A chemical surface preparation may include etching and/or anodizing the surface. A physical surface preparation may include heating, laser-structuring, and/or hardening of the surface.

In embodiments of the invention, the step of positioning comprises orienting the label and/or the object to be marked based on the orientation of the object to be marked and/or the label, preferably based on the orientation of the human-readable and/or machine-readable data. Additionally, the label may be temporally fixed to the object to be marked by fixating means.

In an embodiment of the invention, the fixating means may include exploiting the residual adhesiveness of the not yet activated adhesive layer. In another embodiment of the invention, the fixating means may include an additional adhesive layer on the label and/or previously applied to the surface.

In accordance with the invention, the activation of the adhesive layers may comprise at least one of the activation methods of chemical activation, thermal activation and physical activation. Upon activation, the adhesive layers are allowed to form an integral encapsulating cover to the microelectronic device by connecting with each other and the object to be marked. In embodiments of the invention, after and/or during the activation, the adhesive materials of the adhesive layers change their viscosity and begin to flow and/or connect the different layers with each other. After connecting to each other, the adhesive layers form an integral encapsulating cover to the microelectronic device and also firmly connect the label to the surface of the object. Thus, a permanent bonding of the label to the object is achieved.

Chemical activation may include applying a reagent. Thermal activation may include applying a certain temperature to the label and the object. The temperature may be chosen to be higher than a minimum temperature required for changing the viscosity of the adhesive materials. The temperature may also be chosen to be smaller than a maximum temperature causing permanent damage to the microelectronic device and/or any other layer of the label and/or the object. Physical activation may include activation by a portion of light or any other type of electromagnetic radiation.

The adhesive materials typically change their viscosity again after a certain time after the activation event or after the activation has stopped. Advantageously, after the activation step, the surface formed by the activated adhesive layers and the object to be marked is smooth. Advantageously, the transitions between the surface of the object to be marked and the area of the object carrying the label according to the invention do not have undercuts, sharp edges, steps, or the like, in order to reduce the likelihood of inadvertent removal and/or attachment of particles. The smooth surface transition may improve the resistance of the label to ablation.

In embodiments of the invention the microelectronic device of the data layer does not directly touch the surface of the object-to-be-marked. Instead the microelectronic device of the data layer and the object are spaced apart from each other by a certain distance. The distance is depending on the thickness of the first adhesive layer and the activation process. Due to the distance the microelectronic device is not bent and/or shielded from electromagnetic radiation even if the object has a rounded surface and/or has a metal surface.

### Brief Description of the Drawings

In the following a preferred embodiment of the label of the present invention is illustrated by way of example, in which:
Fig. 1 shows a sectional view of a label according to the invention.
Fig. 2 shows a label according to the invention after the positioning on an object.
Fig. 3 shows a label according to the invention after the activation.

### Detailed Description of the preferred Embodiments

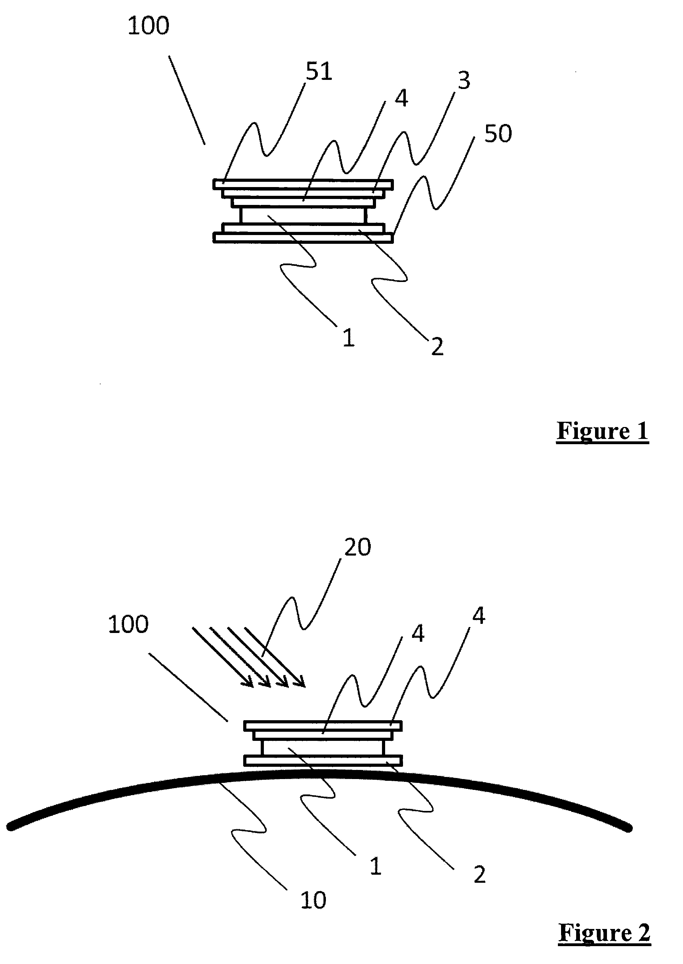

Figure 1 shows a sectional side view of a label 100 according to the invention comprising a data layer 1, a first adhesive layer 2 and second adhesive layer 3. Between the data layer 1 and the second adhesive layer 3 a first additional layer 4 is provided. The fist additional layer 4 may be printed with human-readable and/or machine-readable data. The human-readable and/or machine-readable data may allow a user to deduct the data of the data layer 1. The microelectronic device in the data layer 1 may be an RFID tag.

On the top and bottom surface of the label 100 second additional layers 51 and 50 are provided. Both layers may be removable covers and/or carriers, the carrier(s) may be part of a common carrier of a label matrix.

Figure 2 shows a sectional side view of a label 100 according to the invention and an object 10 where the label is used for marking. The second additional layers 50 and 51 have been removed and the label 100 has been positioned on the surface of the object 10. The activation 20 is performed.

The activation 20 will cause the adhesive materials of the adhesive layers 2 and 3 to change their viscosities and to connect to each other thus forming an encapsulation of the microelectronic device in the data layer 4.

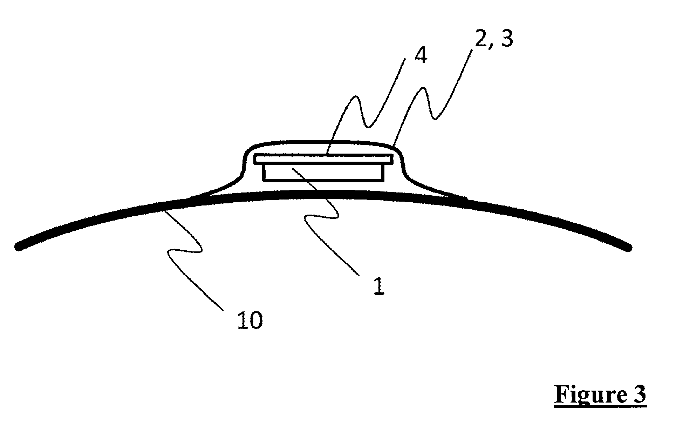

Figure 3 shows the label after the activation has occurred and the adhesive materials of the adhesive layers 2 and 3 have connected to each other and the object. A single smooth surface has been formed by the adhesive materials of the adhesive layers 2 and 3.

The microelectronic device of the data layer 1 does not directly touch the surface of the object to be marked 10. Instead the microelectronic device of the data layer 1 and the object 10 are spaced apart from each other by a certain distance. The distance is depending, for example, on the thickness of the first adhesive layer 2 and the activation process. Due to the distance the microelectronic device is not bent and/or shielded from electromagnetic radiation even if the object has a rounded surface and/or has a metal surface.

## Claims

1. A label (100) for marking objects, wherein the label (100) has at least two oppositely arranged surfaces and comprises at least three stacked layers, including:
a data layer(1) having a microelectronic device (11);
a first adhesive layer (2) having a first adhesive material and being provided on one side of the data layer (1), the first adhesive layer (2) defining a bottom side of the label (100); and
a second adhesive layer (3) having a second adhesive material and being provided on the other side of the data layer (1), the second adhesive layer (3) defining a top side of the label (100).

2. A label (100) for marking objects according to claim 1, wherein a first additional layer (4) is provided between the data layer (1) and the second adhesive layer (3), the first additional layer (4) having human-readable and/or machine-readable data.

3. A label (100) for marking objects according to claims 1 or 2, wherein a second additional layer (50, 51) is provided on the top side and/or the bottom side, the second additional layer (50, 51) being configured to act as a removable protective cover and/or a carrier configured to provide structural support for the label (100).

4. A label (100) for marking objects according to any one of claims 1 to 3, wherein the thickness of all layers totals to no more than 500 µm, preferably no more than 400 µm, further preferably no more than 300 µm.

5. A label (100) for marking objects according to claim 4, wherein the carrier is comprised of a temperature resistant material, preferably a polymer, resistant to temperatures of at least 200 °C.

6. A label (100) for marking objects according to claims 4 or 5, wherein the first adhesive layer (2) is provided to on top of the carrier.

7. A label (100) for marking objects according to claims 5 or 6, wherein the first adhesive layer (2) is provided under the carrier.

8. A label (100) for marking objects according to any one of claims 1 to 7, wherein the adhesive layers (2, 3) are comprised of at least one of epoxy resin based adhesives, particularly epoxy resin based adhesives films, and polyurethane based adhesives, particularly polyurethane based adhesive films.

9. A one or two dimensional label matrix, comprising a plurality of labels (100) for marking objects according to any one of claims 1 to 8, wherein the plurality of labels (100) are each removably attached to a common carrier.

10. A one or two dimensional label matrix according to claim 9, wherein all layers except the common carrier are cut, perforated and/or cleaved around the circumference of the microelectronic device of the data layer (1).

11. A one or two dimensional label matrix according to claim 10, wherein all layers of an area not having a microelectronic device in the data layer (1) are removed from the common carrier.

12. A one or two dimensional label matrix according to claims 10 or 11, wherein an additional common carrier is provided on top of the matrix configured to protect the top adhesive layer (3) of the plurality of labels.

13. A method for marking objects comprising the steps of:
providing an object to be marked (10) having a surface to be marked;
providing a label (100) for marking objects according to any one of claims 1 to 8;
positioning the label on the surface to be marked; and
activating the adhesive materials of the adhesive layers (2, 3) and allowing the adhesive layers (2,3) to form an integral encapsulating cover to the microelectronic device in the data layer (1) by connecting with each other and the object to be marked (10).

14. A method according to claim 13, wherein the step of providing the label (100) comprises the step of separating the label (100) form a label matrix according to any one of claims 9 to 12.

15. A method according to claim 13 or 14, wherein the step of providing a label (100) comprises the step of removing at the least one protective cover (50, 51) from the label.

16. A method according to any one of claims 13 to 15, wherein the method comprises the step of preparing the surface comprises at least one of the methods:
i) mechanical surface preparation
ii) chemical surface preparation
iii) physical surface preparation.

17. A method according to any one of claims 13 to 16, wherein the step of positioning comprises:
orienting the label (100) and/or the object to be marked (10) based on the orientation of the object to be marked (10) and/or the label (100), preferably based on the orientation of the human-readable and/or machine-readable data (4); and
optionally temporally fixing it thereto.

18. A method according to any one of claims 13 to 17, wherein the activation step of the adhesive layers (2, 3) comprises at least one of the activation methods (20):
i) chemical activation
ii) thermal activation
iii) physical activation
and wherein, upon activation, the adhesive layers (2, 3) are allowed to form an integral encapsulating cover to the microelectronic device by connecting with each other and the object to be marked (10).

19. A method according to any one of claims 3 to 18, wherein after the activation step the surface formed by the activated adhesive layers (2, 3) and the object to be marked (10) is smooth.
